# EUROPEAN PATENT SPECIFICATION

(11) **EP 0 608 950 B1**
(45) Date of publication and mention of the grant of the patent: **13.03.1996**
(21) Application number: 94200173.6
(22) Date of filing: 26.01.1994
(51) Int. Cl.: A23L 1/164

(54) **A process for preparing coated, expanded snack products**
Verfahren zur Herstellung beschichteter expandierter Imbissprodukte
Procédé pour la préparation de produits de snack enrobés expansés

(30) Priority: 27.01.1993 NL 9300160
(43) Date of publication of application: 03.08.1994
(73) Proprietor: Sara Lee/DE N.V., NL-3532 AA Utrecht (NL)
(72) Inventor: Bolwijn, Barteld Alexander, NL-3451 RA Vleuten (NL); Van Aken, Petronella Marguerita Maria, NL-3571 GK Utrecht (NL); Kaper, Louris, NL-3772 ZC Barneveld (NL)
(74) Representative: Smulders, Theodorus A.H.J., Ir.

(56) References cited:
- EP-A- 0 375 006
- DE-A- 3 231 580

## Description

The present invention relates to a process for preparing coated, expanded snack products, which comprises coating a core with at least one layer of a dough material, followed by heating thereof under expansion of the coating.

It is known to prepare all kinds of snack products on the basis of nuts and the like, during which preparation an expandable coating is applied to the nuts. By heating, expansion of the coating is obtained. Such products consist of a core of, e.g., peanuts and an envelope of one or more layers of dough, in which dough may be incorporated, if desired, flavourings, such as common salt, spices, aromatic flavours and the like.

The object of the present invention is to provide a process for preparing a new type of snack product based on a core material and having at least two layers of coating applied thereto.

The process according to the invention is based on the steps of coating the core with at least one layer of a strongly expandable dough material, then applying at least one layer of a non- or hardly expandable dough material over the first layer, heating the thus coated product under expansion of the first layer, and selecting the mutual ratios of the layers to be such that the outer layer partly breaks open, so that the first layer partly comes to the surface.

With the process according to the invention a completely new type of coated nuts and the like is obtained, which could be designated as crackled nuts, which process, on the one hand, results in a special, new appearance consisting of the texture of the expanded inner layer alternating with the texture of the non- or hardly expanded outer layer. On the other hand, depending on the selection of the dough materials, the product has a completely new taste and a pleasant "bite".

According to the invention at least two different dough materials are used in the preparation of the products. It is essential that these materials differ in their expandability: the material of the first or inner layer must be strongly expandable, while the outer layer will not or hardly expand. In this connection the outer layer must show an expansion that does not exceed 5%, but will preferably be as low as possible or quite absent. The degree of expansion of the inner layer will preferably be such that after expansion the bulk density of the snack products is 1.5 to 2 times as high as before expansion.

In order to obtain an optimum appearance of the products according to the invention it is preferred that not only the degree of expansion of the dough materials differs, but that their colour and, if desired, also their taste is different. By using the correct colour combination between the two layers of dough, a very interesting appearance of the snack product may be obtained. It is also possible to colour only the inner or just only the outer layer and to have the other layer retain its original natural colour. More in particular, the outer layer is coloured darker than the inner layer to obtain an attractive appearance.

With the invention it is also possible to vary the flavour components of the two layers. By properly combining flavourings in the two layers, special taste sensations may be achieved.

It is observed that British patent publication 2,105,968 discloses a process for preparing a snack product having an expanded coating, the inner layer of which coating expands more strongly than the outer layer in order to protect the core against excessive heat load. The process described in the above application is therefore especially directed to the treatment of products based on fat, which can melt together upon excessive heating.

The process according to the invention can be carried out by successively applying different layers of dough around a core, e.g. peanut, fruit, peanut agglomerate, cheese, other types of nuts or other food pieces. The layers of dough may be applied in conventional apparatuses, in which first the strongly expandable layer is applied and then, optionally after intermediate drying, one or more outer layers are applied, which are not or hardly expandable. Subsequently, the products, which are still wet in general, are heated to the desired expansion temperature. The method of heating will depend on the available temperature, but heating will in general be carried out in an oven or in oil. Suitable heating temperatures are around the conventional temperatures for expanding dough materials and will in general be selected between 125 and 200°C. In case of deep frying, for instance, preference is given to a value of 150-175°C. When heating in an oven or in hot air, this temperature may be slightly lower.

The nature of the different dough materials must be adapted to the desired degree of expansion. To obtain a strongly expandable dough material, preference is generally given to starch, selected from pregelatinized waxy maize flour, native waxy maize flour and pregelatinized sticky rice flour. The selection of the amount of these expandable types of starch depends on the desired superficial structure of the final products. In general, it will be intended that 10-50% of the dough material, based on dry solids, consist of expandable products, while the remaining 50-90% consist of non-expandable products. Preferably, the dough material of the non-expandable layer consists mainly of non-expandable products, such as rice flour or other flour types.

Both dough materials may contain an amount of aromatic flavour and colourings. In general, these are natural aromatic flavours, herbs and common salt, as well as natural colourings. It is also possible to incorporate an amount of sugar in one or both layers.

Both dough materials can be applied to the core in the form of a paste or dough. To obtain the desired crackled effect of the surface, it is generally preferred that the amount of the first dough material is at least equal to the amount of the second dough material. In general, it will be preferred that this amount is greater, e.g. a ratio of 1.1:1 to 3:1, based on dry solids, so that a crackled effect is obtained, with 10-75% of the surface of the products being formed by the inner layer.

The present invention will now be illustrated by the following example.

### Example

About 3 kg peanut agglomerate was introduced into a coating drum, in which 1.6 kg of a sprinkling flour consisting of 30% pregelatinized starch, 30% flour, 30% starch and 10% flavouring was coated while simultaneously adding 1.4 kg of a first spray liquid. Subsequently, 1.0 kg sprinkling flour consisting of non-expandable rice flour was added by means of 0.60 kg spray liquid. The first spray liquid consisted of an aqueous solution of 38 g salt, 154 g sugar, 4 g modified starch, and 11 g flavours per liter of liquid. The second spray liquid consisted of an aqueous solution of 30 g salt, 180 g sugar, and 4 g modified starch per liter of liquid. After some time of coating, the resulting semimanufacture was deep fried in frying oil at 160°C for 8 minutes. The resulting final product showed an attractive crackled effect and could further be sprinkled with an aromatic flavour composition, if desired.

## Claims

1. A process for preparing coated, expanded snack products, which comprises coating a core with at least one layer of a dough material, followed by heating thereof under expansion of the coating, characterized by coating the core with at least one layer of a strongly expandable dough material, then applying at least one outer layer of a non-expandable dough material or hardly expandable dough material with an expansion not exceeding 5% over said first layer, heating the thus coated product under expansion of said first layer, and selecting the mutual ratios of the layers to be such that said outer layer partly breaks open, so that said first layer partly comes to the surface.

2. A process according to claim 1, characterized by the expansion of the material of the first or inner layer being such that after expansion the bulk density of the snack products is 1.5 to 2 times as high as before expansion, while the outer layer will not or hardly expand.

3. A process according to claim 1 or 2, characterized by the dough materials being heated to a temperature ranging from 125 to 200°C.

4. A process according to claim 3, characterized by heating to a value of 150-175°C.

5. A process according to claims 1-4, characterized in that 10-50% of the dough material, based on dry solids, consist of expandable products, while the remaining 50-90% consist of non- or hardly expandable products.

6. A process according to claims 1-5, characterized by using starch in the expandable dough material, selected from pregelatinized waxy maize flour, native waxy maize flour, and pregelatinized sticky rice flour.

7. A process according to claims 1-6, characterized by said layers having different colours.

8. A process according to claim 7, characterized by the outer layer being coloured darker than the inner layer.

9. A process according to claims 1-8, characterized by the amount of the first dough material at least being equal to the amount of the second dough material.

10. A process according to claim 9, characterized by the ratio of the amounts of the first dough matrial to the second dough material ranging from 1.1:1 to 3:1.

11. A process according to claims 1-10, characterized by 10-75% of the surface of the snack product being formed by the inner layer.

12. A process according to claims 1-11, characterized by heating in oil or in an oven.

13. A snack product, obtainable by using the process according to claims 1-12.

## Patentansprüche

1. Verfahren zur Herstellung von beschichteten, expandierten Snack(Imbiß)-Produkten, das umfaßt das Beschichten eines Kerns mit mindestens einer Schicht aus einem Teigmaterial und das anschließende Erhitzen derselben unter Expandieren des Überzugs, dadurch gekennzeichnet, daß der Kern mit mindestens einer Schicht aus einem stark expandierbaren Teigmaterial beschichtet wird, daß dann mindestens eine äußere Schicht aus einem nicht-expandierbaren Teigmaterial oder einem kaum expandierbaren Teigmaterial mit nicht übermäßiger Expansion auf die erste Schicht aufgebracht wird, daß das auf diese Weise beschichtete Produkt unter Expandieren der ersten Schicht erhitzt wird und die Verhältnisse zwischen den Schichten so gewählt werden, daß die äußere Schicht teilweise aufbricht, so daß die erste Schicht teilweise an die Oberfläche kommt.

2. Verfahren nach Anspruch 1, dadurch gekennzeichnet, daß die Expansion des Materials der ersten oder inneren Schicht so ist, daß nach der Expansion die Massendichte der Snack-Produkte 1,5 bis 2 mal so hoch ist wie vor der Expansion, während die äußere Schicht sich nicht oder kaum expandiert.

3. Verfahren nach Anspruch 1 oder 2, dadurch gekennzeichnet, daß die Teigmaterialien auf eine Temperatur in dem Bereich von 125 bis 200°C erhitzt werden.

4. Verfahren nach Anspruch 3, dadurch gekennzeichnet, daß auf einen Wert von 150 bis 175°C erhitzt wird.

5. Verfahren nach den Ansprüchen 1 bis 4, dadurch gekennzeichnet, daß 10 bis 50 % des Teigmaterials, bezogen auf die Trockenfeststoffe, aus expandierbaren Produkten bestehen, während die restlichen 90 bis 50 % aus nicht oder kaum expandierbaren Produkten bestehen.

6. Verfahren nach den Ansprüchen 1 bis 5, dadurch gekennzeichnet, daß in dem expandierbaren Teigmaterial Stärke verwendet wird, die ausgewählt wird aus vorgelatiniertem wachsartigem Maismehl, nativem wachsartigem Maismehl und vorgelatiniertem klebrigem Reismehl.

7. Verfahren nach den Ansprüchen 1 bis 6, dadurch gekennzeichnet, daß die Schichten unterschiedliche Farben haben.

8. Verfahren nach Anspruch 7, dadurch gekennzeichnet, daß die äußere Schicht dunkler gefärbt ist als die innere Schicht.

9. Verfahren nach den Ansprüchen 1 bis 8, dadurch gekennzeichnet, daß die Menge des ersten Teigmaterials mindestens gleich der Menge des zweiten Teigmaterials ist.

10. Verfahren nach Anspruch 9, dadurch gekennzeichnet, daß das Verhältnis zwischen den Mengen des ersten Teigmaterials und des zweiten Teigmaterials in dem Bereich von 1,1:1 bis 3:1 liegt.

11. Verfahren nach den Ansprüchen 1 bis 10, dadurch gekennzeichnet, daß 10 bis 75 % der Oberfläche des Snack(Imbiß)-Produkts von der inneren Schicht gebildet werden.

12. Verfahren nach den Ansprüchen 1 bis 11, dadurch gekennzeichnet, daß das Erhitzen in einem Öl oder in einem Ofen durchgeführt wird.

13. Snack(Imbiß)Produkt, erhältlich durch Anwendung des Verfahrens nach den Ansprüchen 1 bis 12.

## Revendications

1. Procédé de préparation de produits enrobés et gonflés pour apéritif, qui consiste à enrober un coeur d'au moins une première couche d'une matière de pâte, puis à le chauffer avec gonflement de l'enrobage, caractérisé par les étapes consistant à enrober le coeur d'au moins une première couche d'une matière de pâte pouvant fortement gonfler, puis à appliquer au moins une couche extérieure, faite d'une matière de pâte ne pouvant pas gonfler ou d'une matière de pâte pouvant à peine gonfler avec un gonflement ne dépassant pas 5 %, par-dessus ladite première couche, à chauffer le produit ainsi enrobé avec gonflement de ladite première couche, et à choisir les proportions respectives des couches de façon que ladite couche extérieure éclate en partie, afin que ladite première couche vienne en partie à la surface.

2. Procédé selon la revendication 1, caractérisé par le fait que le gonflement de la matière de la première couche ou couche intérieure est tel qu'après gonflement le volume apparent des produits pour apéritif est de 1,5 à 2 fois plus élevé qu'avant gonflement, tandis que la couche extérieure ne gonfle pas ou gonfle à peine.

3. Procédé selon la revendication 1 ou 2, caractérisé par le fait que les matières de pâte sont chauffées à une température comprise entre 125 et 200°C.

4. Procédé selon la revendication 3, caractérisé par un chauffage à une température de 150 à 175°C.

5. Procédé selon les revendications 1 à 4, caractérisé en ce que 10 à 50 % de la matière de pâte, sur la base des solides secs, sont constitués de produits pouvant gonfler, tandis que les 50 à 90 % restants sont constitués de produits ne pouvant pas gonfler ou pouvant à peine gonfler.

6. Procédé selon les revendications 1 à 5, caractérisé en ce qu'on utilise un amidon dans la matière de pâte pouvant gonfler, choisi parmi une farine de maïs cireux prégélatinisé, une farine de maïs cireux naturel, et une farine de riz collant prégélatinisé.

7. Procédé selon les revendications 1 à 6, caractérisé en ce que que lesdites couches sont de couleurs différentes.

8. Procédé selon la revendication 7, caractérisé en ce que la couche extérieure est de couleur plus sombre que la couche intérieure.

9. Procédé selon les revendications 1 à 8, caractérisé en ce que la quantité de la première couche de pâte est au moins égale à la quantité de la seconde couche de pâte.

10. Procédé selon la revendication 9, caractérisé en ce que la proportion des quantités de la première matière de pâte par rapport à la seconde matière de pâte est comprise entre 1,1:1 et 3:1.

11. Procédé selon les revendications 1 à 10, caractérisé en ce que 10 à 75 % de la surface du produit pour apéritif sont formés par la couche intérieure.

12. Procédé selon les revendications 1 à 11, caractérisé par le chauffage dans de l'huile ou dans un four.

13. Produit pour apéritif, pouvant être obtenu en utilisant le procédé selon les revendications 1 à 12.
